# EUROPÄISCHE PATENTSCHRIFT

(11) **EP 1 045 064 B1**
(45) Veröffentlichungstag und Bekanntmachung des Hinweises auf die Patenterteilung: **22.09.2004**
(21) Anmeldenummer: 00107532.4
(22) Anmeldetag: 07.04.2000
(51) Int. Cl.: D06M 13/196, D01F 6/76, B01D 39/16, C08G 75/20

(54) **Schnelle Oxidation von Polyarylensulfid-Fasermaterial**
Rapid oxidation of fibrous polyarylensulphide material
Oxidation rapide de matériau fibreux en poly(sulfures d'arylène)

(30) Priorität: 12.04.1999 DE 19916468
(43) Veröffentlichungstag der Anmeldung: 18.10.2000
(73) Patentinhaber: Ticona GmbH, 65451 Kelsterbach (DE)
(72) Erfinder: Zierer, Dirk, Dr., 65719 Hofheim (DE); Brück, Martin, Dipl.-Ing., 61276 Weilrod (DE); Scheckenbach, Helmut, Dipl.-Ing., 63225 Langen (DE)

(56) Entgegenhaltungen:
- EP-A- 0 283 520
- EP-A- 0 623 641
- EP-A- 0 827 977

## Beschreibung

Die Erfindung betrifft ein Verfahren zur Herstellung von Polyarylensulfon-Fasermaterial durch Oxidation von Fasermaterial aus Polyarylensulfid mit einer Persäure/Säure-Mischung organischer Säuren.

Polyarylensulfone zeichnen sich besonders durch ihre chemische Resistenz und thermische und mechanische Beständigkeit aus. Sie werden deshalb vorwiegend als temperaturbeständige Füll- und Verstärkungsmittel in anderen technischen Kunststoffen eingesetzt. Es besteht auch die Möglichkeit, Polyarylensulfone zu sintern und auf diese Weise hoch temperaturbeständige Produkte zu erhalten.

Polyarylensulfone werden durch Oxidation von Polyarylensulfiden erhalten. Dabei wird in der Regel ein Produkt erhalten, das thermoplastisch nicht weiter verarbeitet werden kann. Dies bedeutet, daß das Erscheinungsbild (Pulver, Faser, Formteil etc.) des oxidierten Produktes im wesentlichen vom Erscheinungsbild des zur Oxidation eingesetzten Polyarylensulfids abhängt. Zur Herstellung von Polyarylensulfon-Fasermaterial muß also Polyarylensulfid-Fasermaterial oxidiert werden.

Aus EP-B-0283520 sind Polyphenylensulfon-Fasern und ein Verfahren zu deren Herstellung durch Oxidation von Polyarylensulfid-Fasern bekannt. Dabei werden Polyphenylensulfid-Fasem mit einem Orientierungsgrad von nicht weniger als 60% und wenigstens 90 mol-% Phenylensulfid-Einheiten mit einem organischen Peroxid, beispielsweise Peressigsäure behandelt. Von Nachteil ist bei diesem Verfahren, daß nur gut orientierte Fasern mit einem hohen kristallinen Anteil oxidiert werden können.

Insbesondere wird in EP-B-0283520 die Oxidation von Compositfasern aus Polyparaphenylensulfid (PPPS) und Polystyrol offenbart, wobei die Oxidation von Faservliesen mit umfaßt ist. Diese Oxidation wird über einen Zeitraum von 1 bis 3 Stunden und bei einer Temperatur von 30°C (Raumtemperatur) oder 50°C durchgeführt. Reine PPPS-Fasern wurden über zwei Wochen bei 30°C oxidiert, um Fasern zu erhalten, die zu 75 mol-% Sulfongruppen, zu 16 mol-% Sulfoxidgruppen und zu 9 mol-% verbleibende Sulfidgruppen enthalten. Von Nachteil sind hier die langen Reaktionszeiten.

Der Einsatz eines Wasserstoffperoxid/Essigsäure-Gemisches zur Oxidation von sulfongruppenhaltigen aromatischen Polythioethern wird in Chimia 28, 567 (1974) beschrieben. Dieses Verfahren setzt allerdings den Einsatz von großen Mengen Suspensionsmittel und hohe Temperaturen voraus. Auch bei diesem Verfahren sind die langen Reaktionszeiten von bis zu 24 Stunden von Nachteil.

Aus EP-A-0 623 641 ist bekannt, daß bei der Oxidation von PPS-Pulver mit Peressigsäure (Essigsäure + H₂O₂) - wahlweise in Gegenwart katalytischer Mengen von Schwefelsäure - ein reines Polyarylensulfon erhalten wird oder ein Polyarylensulfoxidsulfon-Copolymer, bei dem die Anzahl der Sulfoneinheiten überwiegt. Von Nachteil sind die langen Reaktionszeiten von 1-3 Stunden.

Ein Verfahren zur Herstellung von Polyarylensulfonen durch Oxidation von Polyarylensulfiden in Essigsäure mit Wasserstoffperoxid unter Zusatz katalytischer Mengen Schwefelsäure oder organischer Gleichgewichtspersäure wird auch in DE-A-43 14 738 beschrieben. Dieses Verfahren hat den Nachteil, daß die Reaktionstemperatur während der Wasserstoffperoxid-Dosierung starken Schwankungen unterliegt.

In EP-A-0 827 977 wurde gefunden, daß die Temperatur im Reaktionsgemisch bei der Herstellung von Polyarylensulfonen durch Oxidation von Polyarylensulfiden mit Wasserstoffperoxid oder Persäuren leicht konstant gehalten werden kann, wenn ein verminderter Druck herrscht, so daß das flüssige Reaktionsmedium, beispielsweise das Lösemittel, siedet. Von Nachteil ist hier die Tatsache, daß dieses Verfahren nur in einem geschlossenen Gefäß, daher aber nicht kontinuierlich stattfinden kann. Es bestand nun die Aufgabe, ein Verfahren zu entwickeln, mit dessen Hilfe Polyarylensulfid-Fasermaterial wirtschaftlich und technisch problemlos oxidiert werden kann.

Überraschend wurde gefunden, daß bei einer Oxidation von Polyarylensulfid-Fasermaterial mit einer organischen Persäure/Säure-Mischung bei einer Temperatur im Bereich von 60 bis 100 °C bereits nach sehr kurzer Reaktionszeit ein beachtlich hoher Oxidationsgrad erreicht wird.

Die Erfindung betrifft somit ein Verfahren zur Herstellung von Polyarylensulfon-Fasermaterial durch Oxidation von Polyarylensulfid-Fasermaterial mit einer Persäure/Säure-Mischung organischer Säuren, das dadurch gekennzeichnet ist, daß die Oxidation über einen Zeitraum von 10 Sekunden bis 45 Minuten bei einer Temperatur von 60 bis 100°C erfolgt und das Polyarylensulfid im Polyarylensulfid-Fasermaterial eine Kristallinität vom Kleiner 40% aufweist.

Der besondere Vorteil des erfindungsgemäßen Verfahrens ist darin zu sehen, daß durch die schnelle Oxidation nun auch kontinuierliche Verfahren zur Oxidation von Polyarylensulfid-Fasern wirtschaftlich durchführbar werden.

Polyarylensulfide im weitesten Sinne sind lineare, verzweigte oder vernetzte Polymere, die Arylensulfideinheiten enthalten. Polyarylensulfide und deren Herstellung sind beispielsweise in Ullmann's Encyclopedia of Industrial Chemistry", Volume A21, B. Elvers, S. Hawkins und G. Schulz (Eds.), VCH, Weinheim-New York 1992, S. 463-472 beschrieben, worauf Bezug genommen wird. Bevorzugte Polyarylensulfide sind Polyarylenthioether mit wiederkehrenden Einheiten der Formel

-[(Ar¹)ₙ-X]ₘ-[(Ar²)ᵢ-Y]ⱼ-[(Ar³)ₖ-Z]ₗ-[(Ar⁴)ₒ-W]ₚ- (I)

worin Ar¹, Ar², Ar³, Ar⁴ bzw. W, X, Y und Z unabhängig voneinander gleich oder verschieden sind, die Indizes n, m, i, j, k, l, o und p unabhängig voneinander Null oder ganze Zahlen 1, 2, 3 oder 4 sind, wobei ihre Summe mindestens 2 ist, Ar¹, Ar², Ar³ und Ar⁴ Aryleneinheiten mit 6 bis 18 C-Atomen sind und W, X, Y und Z zweiwertige Verknüpfungsgruppen darstellen, ausgewählt aus -SO₂-, -S-, -SO-, -CO, -O-, -COO- oder Alkylen- oder Alkylidengruppen mit 1 bis 6 C-Atomen, und mindestens eine der Verknüpfungsgruppen W, X, Y oder Z aus -S- besteht. Die Aryleneinheiten Ar¹, Ar², Ar³ und Ar⁴ können wahlweise substituiert oder unsubstituiert sein.

Bevorzugte Arylensysteme sind Phenylen, Biphenylen, Naphthylen, Anthracen und Phenanthren. Vorteilhaft enthält das Polyarylensulfid mindestens 30 mol-%, bevorzugt mindestens 50 mol-% und insbesondere mindestens 70 mol-% Arylensulfideinheiten. Bevorzugtes Polyarylensulfid ist Polyphenylensulfid. Dieses enthält im allgemeinen mindestens 50 mol-% und insbesondere mindestens 70 mol-% Phenylensulfideinheiten und ist beispielsweise unter den Namen ®Fortron und ®Ryton bekannt.

Der Begriff Fasermaterial umfaßt im allgemeinen alle möglichen und denkbaren faserförmigen oder aus Fasern zusammengesetzte Materialien, beispielsweise einzelne Fasern, Faserstränge, Netzwerke, Gewebe, Nadelfilze, Vliese etc.

Das erfindungsgemäße Verfahren ist besonders vorteilhaft auf Fasermaterialien anwendbar, deren Fasern einen Filamentdurchmesser von 1 bis 20 µm, bevorzugt 2 bis 10 µm und insbesondere von 3 bis 6 µm aufweisen. Diese Fasern können beispielsweise im Schmelzblasverfahren hergestellt sein. Vorteilhaft ist auch eine spezifische Oberfläche der Fasern nach BET von ≥0,3 m²/g sowie eine Kristallinität des Polyarylensulfids im Bereich von 5 bis 20%. Während die spezifische Oberfläche im oxidierten Produkt weitgehend unverändert bleibt, erhöht sich der Kristallinitätsgrad durch die Oxidation.
Besonders vorteilhaft werden zur Oxidation Faservliese mit einem Flächengewicht von etwa 150 g/cm³ eingesetzt.

Die Vorteile des erfindungsgemäßen Verfahrens zeigen sich insbesondere bei der Oxidation von Polyarylensulfid-Fasermaterial, das entsprechend dem in der EP-A 0 709 499 beschrieben Verfahren, bei dem Polyarylensulfid zusammen mit speziellen organischen Phosphiten oder Phosphoniten extrudiert und im Schmelzblasverfahren zu Mikrofasern geformt wird, hergestellt wurde.

Zur erfindungsgemäßen Oxidation des Polyarylensulfid-Fasermaterials können im allgemeinen Gemische von organischen Persäuren und konzentrierten organischen Säuren verwendet werden. Die Persäure kann dabei im voraus durch Mischen von Wasserstoffperoxid und einer Säure gebildet werden oder in situ" durch Zugabe von Wasserstoffperoxid zur konzentrierten organischen Säure. Organische Säuren sind aromatische oder aliphatische Carbonsäuren, beispielsweise Benzoesäure und Essigsäure. Ist die Säure eine Flüssigkeit, so kann sie als Reaktionsmedium eingesetzt werden. Die Säuren können Wasser enthalten oder in Wasser gelöst sein. Eine organische Persäure ist beispielsweise Peressigsäure.

Vorteilhaft wird den organischen Säuren Schwefelsäure zugesetzt, um die Reaktion mit Wasserstoffperoxid zur Persäure zu katalysieren. Eine Ausnahme ist die Reaktion in Ameisensäure. Sie bedarf keiner weiteren Aktivierung durch mineralische Säuren.

Bevorzugtes Oxidationsmittel gemäß der Erfindung ist Wasserstoffperoxid in konzentrierter Essigsäure, die auch vorteilhaft 0,1 bis 10 Volumenprozent, insbesondere 1 bis 5 Volumenprozent, Schwefelsäure enthalten kann. Wasserverdünnte Säuren können auch verwendet werden. Wasserstoffperoxid und Essigsäure bilden dabei Peressigsäure und es entsteht eine Peressigsäure/Essigsäure-Mischung.

In einer bevorzugten Ausführungsform der Erfindung wird in einem kontinuierlichen Verfahren ein Polyarylensulfid-Faservlies in einem Tauchbad mit einer Peressigsäure/Essigsäure-Mischung oxidiert und das somit erhaltene Polyarylensulfon-Faservlies anschließend über eine Abquetschvorrichtung in ein Waschbad transportiert, im Waschbad gewaschen, erneut über eine Abquetschvorrichtung geführt und abschließend getrocknet.

Wasserstoffperoxid wird im allgemeinen in Form einer 20 bis 85-%igen wäßrigen Lösung eingesetzt. Jedoch können auch höherprozentige Lösungen oder reines Wasserstoffperoxid verwendet werden. Der Anteil der Persäure an der Persäure/Säure-Mischung beträgt im allgemeinen 1 bis 40 Gew.-%, bevorzugt 5 bis 10 Gew.-% und besonders bevorzugt ca. 8 Gew.-%, d.h. 7,5 bis 8,5 Gew.-%. Die Oxidation findet im allgemeinen bei Temperaturen von 60 bis 100 °C, bevorzugt von 60 bis 80 °C, und bei Drucken von 1 mbar bis Normaldruck, vorteilhaft bei Normaldruck, statt. Die Reaktionszeit beträgt im allgemeinen 10 Sekunden bis 45 Minuten, bevorzugt 30 Sekunden bis 10 Minuten, besonders bevorzugt 30 Sekunden bis 2 Minuten. Durch die Oxidation werden im wesentlichen Sulfideinheiten (-S-) in Sulfoneinheiten (-SO₂-) überführt. Es können aber auch Sulfoxideinheiten gebildet werden. Eine Vernetzung zwischen den Polymerketten tritt dabei im allgemeinen nicht auf.

Polyarylensulfon-Fasermaterialien finden beispielsweise Anwendung als temperaturund chemikalienbeständige Verstärkungs- oder Füllstoffe in anderen Hochleistungskunststoffen. Insbesondere Polyarylensulfon-Vliese eignen sich zur Verstärkung von Polyarylensulfid-Formmassen und -Formteilen sowie zur Herstellung von Filtermaterialien für die sogenannte "Harsh Environment Filtration" (HEF) und als Isolationsmaterial, z.B. in der Luft- und Raumfahrt.

### Beispiele 1-6:

Nach dem "melt-blown" Verfahren hergestelltes Polyphenylensulfid-Faservlies (PPS-Vlies) aus ®Fortron 0203 B6 mit einer Flächendichte von 150 g/m² (Ticona GmbH, Frankfurt) wurde mit einer Peressigsäure/Essigsäure-Mischung oxidiert. Dazu wurden jeweils 100 ml einer 8 %igen Peressigsäurelösung in Eisessig im Becherglas auf 70 °C erwärmt. In diese Reaktionslösung wurde ein etwa 26 cm² großes Stück (0,400 g) PPS-Vlies eingetaucht. Dabei stieg die Temperatur rasch auf etwa 75 °C an. Die Reaktion wurde nach 1, 2, 5, 10, 15 bzw. 30 Minuten durch Herausnehmen des Vlieses und Quenchen in Wasser abgebrochen. Nach gründlichem Waschen mit voll entsalztem (VE-) Wasser wurden die Vlies-Stücke über Nacht im Vakuumtrockenschrank bei 120 °C getrocknet und ausgewogen. Die Gewichtszunahme und der Oxidationsgrad im Polyphenylensulfon-Faservlies (PPSO₂-Vlies), bestimmt über das Sauerstoff/Schwefel-Verhältnis der Elementaranalyse, sind in Tabelle 1 zusammengefaßt.

### Beispiel 7:

Ein etwas größeres Stück PPS-Vlies (Einwaage 0,900 g) wurde 6 Stunden mit einer H₂O₂/Essigsäure-Mischung oxidiert (Peressigsäure entsteht erst im Reaktionsgefäß).

Dieser Versuch diente dazu, ein vollständig durchoxidiertes Stück PPSO₂-Vlies zu erhalten. Die Versuchsdaten hierzu sind als Versuchsnummer 7 in Tabelle 1 aufgeführt.

### Beispiele 8-10 (Vergleichsbeispiele):

Es wurde verfahren wie in Beispiel 1 (1-minütige Oxidation) mit dem Unterschied, daß das Ausgangsmaterial vor der Oxidation eine Stunde lang bei einer Temperatur von 140 °C (Nr. 8), 100 °C (Nr. 9) bzw. 90 °C (Nr. 10) getempert wurde, um einen höheren Kristallisationsgrad einzustellen. Die verschlechterte Oxidierbarkeit zeigte sich durch die kaum mehr wahrnehmbare Exothermie der Reaktion und die deutlich niedrigeren Oxidationsgrade (Tabelle 1).

Die Ausbeuten in Tabelle 1 lassen erkennen, daß der Umsatz (berechnet aus der Gewichtszunahme) bereits nach einer Reaktionszeit von 2 Minuten etwa 94,5 % beträgt. Die theoretische Gewichtszunahme bei 100 %iger Oxidation von PPS (MG = 108,16 g/mol) zu PPSO₂ (MG = 140,16 g/mol) beträgt 29,6 % (d.h. bei Einsatz von 0,400 g PPS-Vlies könnte man 0,518 g PPSO₂-Vlies erhalten). Bei Versuch 7 wird dieser Wert auch erreicht.

Die spezifische Oberfläche des PPS-Vlieses nach BET wurde mit einem Sorptomatic-Gerät bestimmt. Es wurde eine spezifische Oberfläche von knapp 1 m²/g ermittelt. Aus diesem Wert läßt sich der mittlere Durchmesser der Filamente abschätzen. Mit einer Dichte von 1,35 g/cm³ für PPS ergibt sich ein Durchmesser von 3 - 4 µm.

**Tabelle 1**

| Oxidation von PPS-Vlies (Fortron 0203 B6, 150 g/m²) | | | | | |
|---|---|---|---|---|---|
| Nr. | Einwaage | Oxidationsmedium | Reaktionszeit | Ausbeute | Oxidationsgrad* |
| 1 | 0,4 g | AcOOH/AcOH (8 %ig) | 1 min | 0,482 g (93,0 %) | 82,7 % |
| 2 | 0,4 g | AcOOH/AcOH (8 %ig) | 2 min | 0,489 g (94,4 %) | 87,0 % |
| 3 | 0,4 g | AcOOH/AcOH (8 %ig) | 5 min | 0,490 g (94,6 %) | 87,6 % |
| 4 | 0,4 g | AcOOH/AcOH (8 %ig) | 10 min | 0,491 g (94,8 %) | 87,7 % |
| 5 | 0,4 g | AcOOH/AcOH (8 %ig) | 15 min | 0,492 g (95,0 %) | 89,0 % |
| 6 | 0,4 g | AcOOH/AcOH (8 %ig) | 30 min | 0,494 g (95,4 %) | 91,5 % |
| 7 | 0,9 g | H₂O₂/AcOH (0,25 mol/l)) | 6 h | 1,17 g (100 %) | 97,0 % |
| 8 | 0,4 g | AcOOH/AcOH (8 %ig) | 1 min | 0,403 g (77,8 %) | 8,5 % |
| 9 | 0,4 g | AcOOH/AcOH (8 %ig) | 1 min | 0,404 g (78,0 %) | 9,4 % |
| 10 | 0,4 g | AcOOH/AcOH (8 %ig) | 1 min | 0,408 g 78,8 % | 13,5 % |

| | | | | | |
|---|---|---|---|---|---|
| * berechnet aus dem O : S -Verhältnis der Elementaranalyse | | | | | |

Die verschieden lang oxidierten Vlies-Proben der Beispiele 1 bis 7 sowie des eingesetzten PPS-Vlieses wurden auf ihre thermische Beständigkeit untersucht. Dazu wurde eine thermogravimetrische Analyse (TGA) an Luft (300 ml/min) von Raumtemperatur bis 600 °C mit einer Heizrate von 10 K/min durchgeführt. Die Ergebnisse sind in Tabelle 2 zusammengefaßt.

**Tabelle 2**

| TG/DTA-Ergebnisse von PPS- und PPSO₂-Vlies an Luft mit 10 K/min. | | | | |
|---|---|---|---|---|
| Nr. | Material | Oxidationszeit | Beginn der Zersetzung | Verbrennung (Tₑₓₒ) |
| 0 | PPS-Vlies | - | Tₘ ≈ 280 °C * | - |
| | | | T_{Z} > 450 °C^{#} | |
| 1 | PPSO₂-Vlies | 1 min | 408 °C | 531 °C |
| 2 | PPSO₂-Vlies | 2 min | 413 °C | 531 °C |
| 3 | PPSO₂-Vlies | 5 min | 417 °C | 528 °C |
| 4 | PPSO₂-Vlies | 10 min | 420,5 °C | 536 °C |
| 5 | PPSO₂-Vlies | 15 min | 422, 5 °C | 535 °C |
| 6 | PPSO₂-Vlies | 30 min | 426 °C | 533 °C |
| 7 | PPSO₂-Vlies | 6 h | 438 °C | 540 °C |

| | | | | |
|---|---|---|---|---|
| * Schmelzpunkt des Vlieses; | | | | |
| ^{#} Onset des Gewichtsverlustes. | | | | |

Ein erkennbarer Gewichtsverlust in der TGA tritt beim PPS-Vlies (Ausgangsmaterial = Probe 0) im Vergleich zu den oxidierten Vliesen (Proben 1 - 7) erst bei höherer Temperatur auf, da das Material vorher schmilzt (bei etwa 280 °C) und dadurch die Oberfläche stark verringert wird. Dies zeigt sich auch an der Selbstentzündung der PPSO₂-Vliese bei etwa 530 - 540 °C, die beim PPS-Vlies in dieser Form nicht stattfindet. Das PPS-Vlies verliert bis 600 °C etwa 55 % an Gewicht (es bleibt ein schwarzes Kügelchen zurück), wogegen die PPSO₂-Vliese rückstandsfrei verbrennen.

Anhand einer separaten DSC-Messung (von RT bis 310 °C mit 20 K/min unter N₂, siehe Abbildung 4a) wurde der kristalline PPS-Anteil im Vlies aus der Enthalpie-Differenz zwischen Schmelzpeak (45 J/g) und Kaltkristallisationspeak (30 J/g) abgeschätzt. Unter der Annahme, daß 100 % kristallines PPS eine Schmelzenthalpie von 130 J/g besitzt, ergibt sich ein kristalliner Anteil von 11,5 % im verwendeten Fortron-Vlies. Dies deckt sich mit den Ergebnissen der Röntgendiffraktometrie, wonach kein kristalliner Anteil mehr erfaßbar war, was bedeutet, daß der Kristallinitätsgrad < 15% ist. Dagegen weist ein 1 Minute lang oxidiertes Material einen Kristallinitätsgrad von ca. 60% auf.

## Patentansprüche

1. Verfahren zur Herstellung von Polyarylensulfon-Fasermaterial durch Oxidation von Polyarylensulfid-Fasermaterial mit einer Persäure/Säure-Mischung einer organischen Säure, **dadurch gekennzeichnet daß** die Oxidation über einen Zeitraum von 10 Sekunden bis 45 Minuten bei einer Temperatur von 60 bis 100°C erfolgt und das Polyarylensulfid im Polyarylensulfid-Fasermaterial eine Kristallinität von kleiner 40% aufweist.

2. Verfahren nach Anspruch 1, **dadurch gekennzeichnet, daß** die spezifische Oberfläche der Fasern im Polyarylensulfid-Fasermaterial nach BET ≥0,3 m²/g ist.

3. Verfahren nach Anspruch 1 oder 2, **dadurch gekennzeichnet, daß** der Filamentdurchmesser der Fasern im Polyarylensulfid-Fasermaterial 1 bis 20 µm beträgt.

4. Verfahren nach Anspruch 1 oder 2, **dadurch gekennzeichnet, daß** der Filamentdurchmesser der Fasern im Polyarylensulfid-Fasermaterial 2 bis 10 µm beträgt.

5. Verfahren nach Anspruch 1 oder 2, **dadurch gekennzeichnet, daß** der Filamentdurchmesser der Fasern im Polyarylensulfid-Fasermaterial 3 bis 6 µm beträgt.

6. Verfahren nach einem der Ansprüche 1 bis 5, **dadurch gekennzeichnet, daß** das Polyarylensulfid im Polyarylensulfid-Fasermaterial eine Kristallinität im Bereich von 5 bis 20 % aufweist.

7. Verfahren nach einem der Ansprüche 1 bis 6, **dadurch gekennzeichnet, daß** zur Oxidation eine Peressigsäure/Essigsäure-Mischung verwendet wird.

8. Verfahren nach einem der Ansprüche 1 bis 7, **dadurch gekennzeichnet, daß** es kontinuierlich durchgeführt wird.

9. Verfahren nach einem der Ansprüche 1 bis 8, **dadurch gekennzeichnet, daß** ein Polyarylensulfid-Faservlies mit einem Flächengewicht von 150 g/m² eingesetzt wird.

10. Verfahren nach Anspruch 9, **dadurch gekennzeichnet, daß** in einem kontinuierlichen Verfahren ein Polyarylensulfid-Faservlies in einem Tauchbad mit einer Peressigsäure/Essigsäure-Mischung oxidiert und das somit erhaltene Polyarylensulfon-Faservlies anschließend über eine Abquetschvorrichtung in ein Waschbad transportiert, im Waschbad gewaschen, erneut über eine Abquetschvorrichtung geführt und abschließend getrocknet wird.

## Claims

1. A process for producing polyarylene sulfone fiber material by oxidizing polyarylene sulfide fiber material with a peracid/acid mixture of an organic acid, which comprises effecting said oxidizing at 60 to 100°C for 10 seconds to 45 minutes, and wherein the polyarylene sulfide in said polyarylene sulfide fiber material has a crystallinity of less than 40%.

2. The process of claim 1, wherein the fibers in said polyarylene sulfide fiber material have a BET specific surface area of ≥ 0.3 m²/g.

3. The process of claim 1 or 2, wherein said fibers in said polyarylene sulfide fiber material have a filament diameter of 1 to 20 µm.

4. The process of claim 1 or 2, wherein said fibers in said polyarylene sulfide fiber material have a filament diameter of 2 to 10 µm.

5. The process of claim 1 or 2, wherein said fibers in said polyarylene sulfide fiber material have a filament diameter of 3 to 6 µm.

6. The process of any of claims 1 to 5, wherein the polyarylene sulfide in said polyarylene sulfide fiber material has a crystallinity within the range from 5 to 20%.

7. The process of any of claims 1 to 6, wherein said oxidizing is effected using a peracetic acid/acetic acid mixture.

8. The process of any of claims 1 to 7 in continuous practice.

9. The process of any of claims 1 to 8, wherein said polyarylene sulfide fiber material used is a polyarylene sulfide fiber web having a basis weight of about 150 g/m².

10. The process of claim 9 as a continuous process comprising a polyarylene sulfide fiber web being oxidized with a peracetic acid/acetic acid mixture in a dip bath and the resulting polyarylene sulfone fiber web then being transported through squeeze means into a wash bath, washed in the wash bath, again passed through squeeze means and finally dried.

## Revendications

1. Procédé pour la préparation d'un matériau fibreux de poly(sulfone d'arylène) par oxydation d'un matériau fibreux de poly(sulfure d'arylène) avec un mélange peracide/acide d'un acide organique, **caractérisé en ce que** l'oxydation est réalisée sur un laps de temps de 10 secondes à 45 minutes à une température de 60 à 100°C et le poly(sulfure d'arylène) dans le matériau fibreux de poly(sulfure d'arylène) présente une cristallinité inférieure à 40%.

2. Procédé selon la revendication 1, **caractérisé en ce que** la surface spécifique des fibres dans le matériau fibreux de poly(sulfure d'arylène) selon BET est de ≥0,3 m²/g.

3. Procédé selon la revendication 1 ou 2, **caractérisé en ce que** le diamètre de filament des fibres dans le matériau fibreux de poly(sulfure d'arylène) est de 1 à 20 µm.

4. Procédé selon la revendication 1 ou 2, **caractérisé en ce que** le diamètre de filament des fibres dans le matériau fibreux de poly(sulfure d'arylène) est de 2 à 10 µm.

5. Procédé selon la revendication 1 ou 2, **caractérisé en ce que** le diamètre de filament des fibres dans le matériau fibreux de poly(sulfure d'arylène) est de 3 à 6 µm.

6. Procédé selon l'une quelconque des revendications 1 à 5, **caractérisé en ce que** le poly(sulfure d'arylène) dans le matériau fibreux de poly(sulfure d'arylène) présente une cristallinité dans la plage de 5 à 20%.

7. Procédé selon l'une quelconque des revendications 1 à 6, **caractérisé en ce qu'**on utilise pour l'oxydation un mélange acide peracétique/acide acétique.

8. Procédé selon l'une quelconque des revendications 1 à 7, **caractérisé en ce qu'**il est réalisé en continu.

9. Procédé selon l'une quelconque des revendications 1 à 8, **caractérisé en ce qu'**on utilise un non-tissé de fibres de poly(sulfure d'arylène) présentant un poids surfacique de 150 g/m².

10. Procédé selon la revendication 9, **caractérisé en ce qu'**on oxyde dans un procédé continu un non-tissé de fibres de poly(sulfure d'arylène) dans un bain d'immersion avec un mélange acide peracétique/acide acétique et on transporte ensuite le non-tissé de fibres de poly(sulfone d'arylène) obtenu via un dispositif d'écrasement dans un bain de lavage, on lave dans le bain de lavage, on passe à nouveau sur un dispositif d'écrasement puis on sèche.
